# EUROPÄISCHE PATENTSCHRIFT

(11) **EP 2 125 438 B1**
(45) Veröffentlichungstag und Bekanntmachung des Hinweises auf die Patenterteilung: **08.04.2020**
(21) Anmeldenummer: 08707642.8
(22) Anmeldetag: 09.02.2008
(51) Int. Cl.: B60R 13/08, E04C 2/16, C04B 26/28, D04H 1/4209, D04H 1/64, F16L 59/04, C04B 111/28, D04H 1/76, C04B 111/52

(54) **VERFAHREN UND VORRICHTUNG ZUR HERSTELLUNG EINES FORMTEILS SOWIE FORMTEIL ALS WÄRME- UND/ODER SCHALLDÄMMELEMENT**
METHOD AND DEVICE FOR PRODUCING A MOLDED PART AND MOLDED PART AS HEAT INSULATING AND/OR SOUND ABSORBING ELEMENT
PROCÉDÉ ET DISPOSITIF DE FABRICATION D'UN ÉLÉMENT MOULÉ ET ÉLÉMENT MOULÉ SERVANT D'ÉLÉMENT D'ISOLATION THERMIQUE ET/OU PHONIQUE

(30) Priorität: 23.02.2007 DE 102007009337; 02.08.2007 DE 102007036346
(43) Veröffentlichungstag der Anmeldung: 02.12.2009
(73) Patentinhaber: Rockwool International A/S, 2640 Hedehusene (DK)
(72) Erfinder: DASCHKEIT, Axel, 59192 Bergkamen (DE)
(74) Vertreter: Rausch Wanischeck-Bergmann Brinkmann
(86) Internationale Anmeldenummer: PCT/EP2008/000999
(87) Internationale Veröffentlichungsnummer: WO 2008/101604

(56) Entgegenhaltungen:
- DE-A1- 4 213 388
- DE-A1- 10 147 527
- DE-A1-102004 053 751
- US-A1- 2004 248 490

## Beschreibung

Die Erfindung betrifft ein Verfahren und eine Vorrichtung zur Herstellung eines vorzugsweise als Wärme- und/oder Schalldämmelement ausgebildeten Formteils, insbesondere eines Formpressteils aus Mineralfasern, beispielsweise Stein- und/oder Glasfasern. Ferner betrifft die Erfindung ein Formteil als Wärme- und/oder Schalldämmelement, insbesondere als Verkleidungsteil im Fahrzeugbau, hergestellt mit einem gattungsgemäßen Verfahren, bestehend aus Mineralfasern, insbesondere Stein- und/oder Glasfasern.

Aus dem Stand der Technik sind verschiedene Verfahren zur Herstellung eines vorzugsweise als Wärme- und/oder Schalldämmelement ausgebildeten Formteils, insbesondere eines Formpressteils bekannt. Beispielsweise offenbart die DE 42 13 388 A1 ein Verfahren zur Herstellung eines Schall- oder wärmedämmenden Bauelements, beispielsweise einer Platte, einer Schale, eines Formteils oder dergleichen für Schallschutz- und Dämmzwecke. Bei diesem vorbekannten Verfahren werden mit Hilfe von Düsen oder dergleichen aus einer Gesteinsschmelze, insbesondere einer Basaltsteinschmelze Fasern oder Fäden gezogen, die mit Hilfe von Sprühwasser gekühlt und verfestigt und auf einer bewegten Fläche zu einem Wirrvlies oder einer Matte gesammelt werden. Hierbei ist vorgesehen, dass die Fäden oder Fasern mit einem in Wasser gelösten, phenolfreien Bindemittel behandelt werden, welches selber nicht giftig ist und bei Erwärmung auch keine giftigen Dämpfe oder Gase bildet. Die aus den Fasern oder Fäden hergestellten Wirrvliese oder Matten werden anschließend zu Formteilen oder Platten, wie beispielsweise glatten oder wellförmigen Platten oder Strukturteilen mit Dichten im Bereich zwischen 120 kg/m³ und 300 kg/m³ gepreßt. Soweit diese Formteile oder Platten eine ausreichende Dichte aufweisen sind diese Elemente stabil und formhaltig. Die Formhaltigkeit kann auch durch die Wahl des Substrats beeinflußt werden.

Bei diesem vorbekannten Verfahren hat es sich als nachteilig erwiesen, dass die Herstellung von Formteilen, insbesondere Formpressteilen unterschiedlicher Ausgestaltung die Bevorratung unterschiedlicher Ausgangsmaterialien, nämlich unterschiedlicher Wirrvliese und Matten erforderlich macht. Darüber hinaus sind diese Ausgangsmaterialien nur im geringen Maße hinsichtlich ihrer Zusammensetzung aus Mineralfasern und Bindemittel beeinflußbar, so dass auch diesbezüglich ein erhöhter Bevorratungsaufwand der Ausgangsmaterialien notwendig ist. Ein weiteres Beispiel hierfür wird durch die DE 101 47 527 gegeben.

Ausgehend von diesem Stand der Technik liegt der Erfindung die **Aufgabe** zugrunde, ein gattungsgemäßes Verfahren und eine gattungsgemäße Vorrichtung bzw. ein gattungsgemäßes Formteil als Wärme- und/oder Schalldämmelement derart weiterzubilden, dass bei dem gattungsgemäßen Verfahren und eine gattungsgemäße Vorrichtung eine hohe Flexibilität hinsichtlich der herzustellenden Formteile ermöglicht ist, während es bei dem Formteil darauf ankommt, dieses in einfacher und variationsreicher Vielfalt auszubilden.

Die **Lösung** dieser Aufgabenstellung sieht bei einer ersten Ausführungsform eines erfindungsgemäßen Verfahrens vor, dass die Mineralfasern als Flocken und/oder Granulate agglomeriert, mit oder ohne Bindemitteln mit vorbestimmter Schüttdichte und/oder vorbestimmten Flächengewicht und/oder vorbestimmten Bindemittelanteilen in eine Form eingefüllt und anschließend als Formteil, insbesondere als Formpressteil gepreßt werden.

Gemäß einer zweiten Ausführungsform eines erfindungsgemäßen Verfahrens ist zur **Lösung** der voranstehend dargestellten Aufgabenstellung vorgesehen, dass die Mineralfasern auf einem Förderelement abgelegt werden, das Bestandteil des Formteils wird, wobei ein Teil des Förderelements mit darauf angeordneten Mineralfasern, insbesondere während oder nach dem Pressvorgang abgetrennt wird.

Hinsichtlich des erfindungsgemäßen Formteils ist zur **Lösung** der voranstehend genannten Aufgabenstellung vorgesehen, dass das Formteil aus Mineralfasern besteht, die als Flocken und/oder Granulate agglomeriert und mit oder ohne Bindemittel mit vorbestimmter Schüttdichte und/oder vorbestimmtem Flächengewicht und/oder vorbestimmtem Bindemittelanteil in einer Form und/oder auf einer Auflage angeordnet und durch Druck miteinander verbunden sind, wobei die Flocken und/oder Granulate mit der Auflage oder der Form verbunden sind.

Demzufolge ist erfindungsgemäß vorgesehen, dass abweichend vom voranstehend dargestellten Stand der Technik die Formteile nicht aus Mineralfaservliesen oder Mineralfasermatten, sondern aus zu Flocken und/oder Granulaten agglomerierten Mineralfasern hergestellt werden. Hierbei werden einzelne Mineralfasern derart aufbereitet, dass sie anschließend zu Flocken agglomeriert werden, die hinsichtlich ihrer Beschaffenheit aber ohne weiteres handhabbar und insbesondere in Abhängigkeit eines gewünschten Flächengewichts oder einer gewünschten Schüttdichte in einer Form oder auf einer Auflage angeordnet werden können. Diese Vorgehensweise hat insbesondere den Vorteil, dass dem Hersteller derartiger Formteile oder Formpressteile lediglich zwei Komponenten zur Verfügung gestellt werden müssen. Zum einen benötigt der Hersteller die Flocken und/oder Granulate aus agglomerierten Mineralfasern und zum anderen das erforderliche Bindemittel, um die Mineralfasern der Flocken und/oder Granulate miteinander zu binden. Die Flocken und/oder Granulate werden zu diesem Zweck in eine Form eingefüllt und anschließend gepreßt. Nach dem Preßvorgang hat das Formteil seine endgültige Form und ist für eine Weiterverarbeitung geeignet, ohne dass es einer weiteren Bearbeitung, beispielsweise einem Zuschneiden des Formteils oder einem Aushärten des Bindemittels bedarf. Erfindungsgemäß kann auch fertiges Gemisch aus Mineralfasern und Bindemitteln vorgesehen sein, welches als eine Komponente in die Form eingefüllt wird.

Demzufolge löst sich die Erfindung insbesondere von der Vorstellung, dass zur Herstellung von Formteilen oder Formpressteilen aus Mineralfasern das Vorprodukt matten- oder plattenförmig vorliegen muß. Die Flocken bzw. Granulate sind in einfacher Weise handhabbar, insbesondere dosierbar und können abhängig von der geplanten Verwendung mit verschiedenen Bindemitteln zu Formteilen verpreßt werden.

Es ist nach einem weiteren Merkmal der Erfindung vorgesehen, dass die Flocken und/oder Granulate aus matten- und/oder plattenförmigen Faservliesen mit oder ohne, insbesondere ausgehärtetem Bindemittel hergestellt werden. Demzufolge kann die Herstellung der Fasern für die Flocken und/oder Granulate sowohl im Zuge eines herkömmlichen Herstellungsverfahrens dahingehend erfolgen, dass eine mineralische Schmelze in einem Schmelzaggregat erzeugt und einem Zerfaserungsaggregat zugeführt wird, in dem die Schmelze in mikrofeine Fasern zerfasert, die Mineralfasern mit Binde- und/oder Imprägnierungsmitteln benetzt und anschließend auf einem Förderband als Vlieslage abgelegt werden. Diese Vlieslage wird sodann derart zerkleinert, dass Flocken und/oder Granulate entstehen, die jeweils aus einer Vielzahl von Mineralfasern ausgebildet sind. Darüber hinaus besteht die Möglichkeit, dass beispielsweise bei der Produktion üblicher Mineralfaserdämmstoffe anfallende Reststoffe, beispielsweise beim Besäumen von Rändern für die Herstellung der Flocken und/oder Granulaten aus Mineralfasern herangezogen werden. Schließlich besteht noch die Möglichkeit, dass im Zuge eines Recyclings rückgebaute Mineralfaserdämmstoffe zerkleinert und zu Flocken und/oder Granulaten verarbeitet werden, die sodann als Ausgangsmaterial für die Herstellung der Formteile, insbesondere der Formpressteile dienen. Selbstverständlich können die Flächen und/oder Granulate auch aus einer Mischung aus Recyclingmaterial, produktionsbedingten Reststoffen und/oder produziertem Fasermaterial hergestellt werden.

Nach einem weiteren Merkmal der Erfindung ist vorgesehen, dass die Flocken und/oder Granulate aus mit Bindemittel(n) benetzten agglomerierten Mineralfasern hergestellt werden. Eine Alternative stellen zu Flocken und/oder Granulate durch mechanische Verbindungen, beispielsweise im Zuge von Vernadelungen oder Verfilzungen verbundene Mineralfasern dar. Es hat sich als sinnvoll erwiesen, die Bindemittelgehalte gering zu halten. Eine Verringerung der Bindemittelgehalte führt dazu, dass eine geringe Brennbarkeit dieser Materialien sichergestellt ist, so dass eine gute Brandklasse eingehalten wird.

Vorzugsweise ist vorgesehen, dass den Flocken und/oder Granulaten das Bindemittel vor dem Einfüllen in die Form hinzugefügt wird. Hierbei handelt es sich um zusätzliches Bindemittel, welches die Bindung zwischen den einzelnen Flocken und/oder Granulaten im Formkörper sicherstellt. Eine Alternative hierzu sieht vor, dass den Flocken und/oder Granulaten das Bindemittel während und/oder nach dem Einfüllen in die Form hinzugefügt wird. Bei dieser Ausgestaltung ist somit vorgesehen, dass gleichzeitig mit den Flocken und/oder Granulaten das Bindemittel in die Form eingefüllt wird. Hierdurch kommt es zu einer guten Durchmischung der Flocken und/oder Granulate mit dem Bindemittel. Ergänzend oder alternativ kann das Bindemittel nach dem Einfüllen der Flocken und/oder Granulate in die Form hinzugefügt werden. Soweit es sich um ein flüssiges Bindemittel handelt verteilt sich dieses auch noch in diesem Verfahrensschritt im Wesentlichen gleichmäßig zwischen den Flocken und/oder Granulaten. Andererseits kann mit dieser Vorgehensweise ein Schichtenaufbau erzielt werden, bei dem das Bindemittel auf der Oberfläche der Flocken und/oder Granulate angeordnet ist und demzufolge eine Versiegelung bzw. Beschichtung bildet.

Die Flocken und/oder Granulate werden vorzugsweise mit einer maximalen Größe verarbeitet, die eine Siebweite bis 100 mm, insbesondere bis 35 mm vorzugsweise bis 12,5 mm, jeweils beginnend bei 0,1mm passiert. Es hat sich ferner als vorteilhaft erwiesen, die Flocken und/oder Granulate mit einer Schüttdichte von 20 bis 1.000 kg/m³, insbesondere von 20 bis 600 kg/m³, vorzugsweise 50 bis 300 kg/m3 in die Form zu füllen, um Formteile bzw. Formpressteile herzustellen, die eine ausreichende Stabilität, insbesondere Biegesteifigkeit aufweisen.

Das Bindemittel wird vorzugsweise während des Preßvorgangs durch Druck und/oder Temperatur ausgehärtet. Je nach Bindemittel kann hierbei der üblicherweise bei der Herstellung entsprechender Formteile erzeugte Druck ausreichen, um Temperaturbedingungen in der Form zu erzeugen, die für eine Aushärtung des Bindemittels ausreichen. Um den Aushärtevorgang zu beschleunigen hat es sich aber als vorteilhaft erwiesen, während des Preßvorgangs die Temperatur im Preßwerkzeug zu erhöhen. Der Aushärtevorgang kann vorzugsweise mit Wasserdampf durchgeführt und/oder beschleunigt werden. Als Bindemittel haben sich insbesondere anorganische und/oder organische Bindemittel, insbesondere aus nachwachsenden Rohstoffen, wie beispielsweise Stärke und/oder Glucose als vorteilhaft erwiesen, so dass diese Bindemittel im Zuge des erfindungsgemäßen Verfahrens verwendet werden.

Nach einem weiteren Merkmal der Erfindung ist vorgesehen, dass die Flocken und/oder Granulate vor dem Einfüllen in die Form zu größeren Elementen, insbesondere Flocken- und/oder Granulatbahnen oder zu, vorzugsweise hochkomprimierten Formteilen, wie Füllstoffkissen, Leisten, Stegen, Profilen oder dergleichen agglomeriert werden. Derartige Elemente können beispielsweise außenseitig in der Form angeordnet sein, während zwischen diesen Elementen Flocken und/oder Granulate angeordnet werden. Durch die Elemente kann während des Preßvorgangs eine Druckverteilung innerhalb der Form eingestellt werden.

Die Flocken und/oder Granulate können aus Fasern unterschiedlicher Ausgangsmaterialien hergestellt werden. Beispielsweise sind Mischungen aus mineralischen Fasern, beispielsweise aus Glasfasern und Steinfasem möglich, wie auch Mischungen aus mineralischen und anderen Fasern, wie beispielsweise Holzfasern, Baumwollefasern, Fasern aus Pflanzen, Tierhaar oder dergleichen und/oder Kunststofffasern. Die letztgenannten Kunststofffasern können hierbei sehr wohl als Bindemittel dienen, soweit diese Kunststofffasern beispielsweise thermoplastisch ausgebildet sind, so dass sie im Zuge ihrer Aufschmelzung eine Klebewirkung entfalten.

Aus den Flocken und/oder Granulaten werden Formteile mit einem Flächengewicht zwischen 200 und 7.500 g/m², insbesondere zwischen 500 und 5.000 g/m², vorzugsweise zwischen 500 und 4000g/m² hergestellt. Zur Durchführung des Verfahrens ist vorgesehen, dass die Flocken und/oder Granulate in einer Bevorratungseinrichtung bevorratet und in erforderlicher Menge aus der Bevorratungseinrichtung abgezogen und zumindest einer Form zugeführt werden. Diesbezüglich hat es sich als vorteilhaft erwiesen, die Flocken und/oder Granulate pneumatisch zu fördern. Im Zuge der Förderung der Flocken und/oder Granulate werden diese auf dem Förderweg vorzugsweise aufgelockert und/oder vergleichmäßigt. Eine entsprechende Auflockerung und/oder Vergleichmäßigung kann darüber hinaus ergänzend oder alternativ in der Bevorratungseinrichtung erfolgen.

Das Bindemittel wird den Flocken und/oder Granulaten flüssig, pulver- und/oder faserförmig beigemischt, wobei die Beimischung des Bindemittels entweder - wie voranstehend ausgeführt - in oder unmittelbar vor der Form und/oder unmittelbar nach der Entnahme aus der Bevorratungseinrichtung erfolgen kann. Hierbei hat es sich als vorteilhaft erwiesen, dass zumindest ein flüssiges Bindemittel insbesondere vernebelt und den Flocken und/oder Granulaten vor und/oder während dem Einbringen in die Form zugeführt wird.

Vorzugsweise werden die Flocken und/oder Granulate nach der Beimischung des Bindemittels auf einem Trägermaterial abgelegt. Zusammen mit dem Trägermaterial können die Flocken und/oder Granulate als Formteil gepreßt werden. Soweit das Formteil in einer Form hergestellt wird hat es sich als vorteilhaft erwiesen, die Form nach dem Aushärten des Bindemittels zu entfernen. Als Trägermaterial hat sich insbesondere ein Glasfaservlies, ein Kohlefaservlies, eine Kunststoff- oder Metallfolie und/oder eine Kombination dieser Materialien als vorteilhaft erwiesen. Ferner sind sogenannte SMC (sheet mouldings compounds) in besonderer Weise als Trägermaterial geeignet. Alternativ besteht die Möglichkeit, dass die Form Bestandteil des Formteils ist. Des weiteren kann das Formteil als Zwischenprodukt nach dem Entfernen der Form auf einem Trägermaterial angeordnet werden, mit dem das Formteil anschließend über ergänzendes Bindemittel verbunden wird.

Es ist nach einem weiteren Merkmal der Erfindung vorgesehen, dass ein Formkörper in einer Vorform vorgeformt und anschließend entnommen und einem Preßvorgang zugeführt wird. Diese Ausgestaltung der Erfindung hat den Vorteil, dass der Formkörper aus einer relativ lockeren Anordnung von Flocken und/oder Granulaten vorgeformt werden kann. In der Regel wird bei diesem Verfahren das Bindemittel bereits durch die Umgebungstemperatur geringfügig ausgehärtet, so dass die Formgebung des Formkörpers in der Vorform auch nach dem Entformen beibehalten werden kann. Grundsätzlich besteht aber auch die Möglichkeit, dass das Bindemittel vor dem Pressvorgang vorgehärtet wird, um beispielsweise die Aushärtezeit und damit die Presszeiten zu kürzen.

Schließlich hat es sich bei einem voranstehend beschriebenen Verfahren als vorteilhaft erwiesen, dass die Formteile mit hoch verdichteten Randbereichen und/oder Pinchkanten ausgebildet werden.

Eine alternative Ausgestaltung des erfindungsgemäßen Verfahrens, stellt ein getaktetes oder quasi kontinuierliches Verfahren zur Herstellung von Formteilen bzw. Formpressteilen dar, die insbesondere in der Automobilindustrie verwendbar sind. Derartige Formpressteile für die Automobilindustrie sind in der Regel mindestens einseitig mit einem Vlies oder dergleichen kaschiert. Durch die Verwendung von Mineralfasern, insbesondere in Form von Flocken und/oder Granulat lassen sich diese Formteile mit unterschiedlichen Flächengewichten und/oder Kaschierungen herstellen.

Bei der zweiten alternativen Ausgestaltung des erfindungsgemäßen Verfahrens ist vorgesehen, dass Mineralfasern insbesondere in Form eines Granulats aus einer Bevorratungseinrichtung abgezogen und auf einer nachgeschalteten Fördereinrichtung abgelegt werden. Vorzugsweise werden die Mineralfasern kurz vor dem Ablegen auf der Fördereinrichtung über seitlich angeordnete Düsen oder dergleichen mit Binde- und/oder Imprägniermittel besprüht, wobei die Binde- und/oder Imprägniermittel unterschiedlich ausgestaltet sein können. Die Binde- und/oder Imprägniermittel können als Flüssigkeit oder in Form von Granalien zugemischt werden.

Die Fördereinrichtung weist ein Förderelement auf, auf dem die Mineralfasern abgelegt werden. Dieses Förderelement wird Bestandteil des herzustellenden Formteils, wobei ein Teil des Förderelements mit darauf angeordneten Mineralfasern, insbesondere während oder nach dem Pressvorgang abgetrennt wird. Als Förderelement kommt beispielsweise ein Kohlefaservlies in Frage, das im Formteil als Kaschierung dient. Weiterhin weist die Fördereinrichtung eine Vielzahl von parallel ausgerichteten Walzen auf, auf denen das Förderelement gefördert wird. Vorzugsweise ist bei diesen Walzen vorgesehen, dass sie eine Oberfläche mit einem hohen Reibwert aufweisen, um einen problemlosen Transport des Förderelements auch bei aufliegender Mineralfasermasse zu gewährleisten. Ergänzend oder alternativ können in das Förderelement formschlüssig eingreifende Vorsprünge insbesondere Stachel vorgesehen sein. Diese Stachel sind vorzugsweise außenseitig an den Walzen angeordnet, so dass sie im Seitenrandbereich des Förderelements eingreifen. Im Bereich der Pressvorrichtung wird das Förderelement durch Stachelräder geführt, die insbesondere beidseitig der Pressvorrichtung angeordnet sind.

Das Förderelement wird von einer Vorratsrolle abgezogen, wobei entweder ein kontinuierliches oder ein getaktetes Abziehen des Förderelements von der Vorratsrolle vorgesehen ist. Die Art des Abziehens des Förderelements von der Vorratsrolle ist in erster Linie von der Arbeitsweise einer der Fördereinrichtung nachgeschalteten Kompressionsvorrichtung abhängig.

Das derart mit Mineralfasern bestückte Förderelement wird sodann einer Kompressionsvorrichtung zugeführt, die insbesondere einen hohen Druck auf das Förderelement und die Mineralfasern ausübt, so dass hier von einer Preßvorrichtung gesprochen werden kann. Die Kompressionsvorrichtung weist einen als Matrize zur Formgebung des Formteils ausgebildeten Stempel und eine Gegendruckplatte auf. Es ist auch möglich, das die Kompressionsvorrichtung mehrere Stempel mit Matrizen aufweist. Diese Ausgestaltung ist insbesondere dann sinnvoll, wenn relativ kleine Formteile geformt werden.

Bei dreidimensionalen Formteilen ist die Presseinrichtung aus gegenläufigen Stempeln gebildet, die in der Oberfläche die formgebenden Matrizen aufweisen. Bei kleinen dreidimensionalen Formteilen kann es von Vorteil sein, mehrere derartiger Stempelsysteme in einer Presseinrichtung anzuordnen.

In der Kompressionsvorrichtung wird das gewünschte Formteil gepreßt und gleichzeitig das gegebenenfalls in den Mineralfasern enthaltende oder hinzugefügte Bindemittel thermisch ausgehärtet. Es besteht auch die Möglichkeit, dass das Bindemittel, beispielsweise in Form von Granalien in der Kompressionsvorrichtung durch Heißluft aktiviert und anschließend ausgehärtet wird.

Vorzugsweise ist der Stempel mit der oder den Matrizen mit einer gegenüber dem Förderelement geringeren Breite ausgebildet, so dass bei dieser Ausgestaltung die mit den Stacheln versehenen Walzen außerhalb des Stempel in das Förderelement eingreifen und das Förderelement durch eine Drehbewegung zumindest einer mit Stacheln ausgebildeten Walze durch den Stempel geschoben und/oder gezogen wird. Bei einer diskontinuierlich arbeitenden Kompressionsvorrichtung ist vorgesehen, dass der Vortrieb des Fördermittels über die Walzen in Abhängigkeit des Pressvorgangs gesteuert wird, so dass die Walzen während des Pressvorgangs nicht angetrieben werden.

Durch die Elastizität des Förderelements wird sichergestellt, dass der Formkörper auch während des Pressvorgangs durch die in das Förderelement eingreifende Stacheln der Walzen geführt bleibt, so dass er im Anschluß an den Pressvorgang aus der Kompressionsvorrichtung heraufgeführt werden kann.

Im Anschluß an die Kompressionsvorrichtung liegt nun ein Band aneinander hängender, seitlich durch die Stacheln der Walzen geführter Formteile bzw. Formpressteile vor, welches anschließend einer Schneid- und/oder Besäumungsanlage zugeführt wird. In dieser Schneid- und/oder Besäumungsanlage werden zum einen die in Längsrichtung verlaufenden Randbereiche der voneinander getrennten Formteile besäumt und zum anderen die miteinander verbundenen Formteile quer zur Längserstreckung des Bandes voneinander getrennt. Weist das Band mehrere quer zur Längserstreckung nebeneinander angeordnete Formteile auf, so sind weitere Schneideinrichtungen vorgesehen, die einen Schnitt in Förderrichtung bzw. in Längsrichtung des Bandes ermöglichen. Hierzu haben sich beispielsweise Kreis- und Bandmesser als geeignet erwiesen.

In einer Vorrichtung zur Durchführung dieses Verfahrens ist es als vorteilhaft anzusehen, wenn diese Schneideinrichtungen relativ zum Band aus dem Förderelement und den aufgelegten, in der Kompressionsvorrichtung verdichteten Mineralfasern verstellbar sind.

Nach einem weiteren Merkmal der Erfindung ist vorgesehen, dass die Mineralfasern als Granulat und/oder Flocken in Abhängigkeit der Taktung der Kompressionsvorrichtung aus der Bevorratungseinrichtung abgezogen und auf dem Förderelement abgelegt werden, so dass auf das Förderelement beabstandet zueinander angeordnete Mineralfaserhaufen abgelegt werden. Durch diese Ausgestaltung wird Fasermaterial eingespart und darüber hinaus auch das Schneiden des Förderelements zwischen benachbarten Formteilen vereinfacht. Die Lebensdauer der hierzu verwendeten Schneideinrichtungen wird dadurch deutlich verlängert, dass lediglich eine oder zwei Vlieslagen nicht jedoch agglomerierte Mineralfasern geschnitten werden müssen.

Nach einem weiteren Merkmal der Erfindung ist vorgesehen, dass eine Kaschierung auf den auf dem Förderelement aufgelegten Mineralfasern angeordnet wird. Die Kaschierung wird vorzugsweise zusammen mit dem Förderelement und den Mineralfasern der Kompressionsvorrichtung zugeführt wird und in der Kompressionsvorrichtung mit dem Förderelement verbunden. Beispielsweise kann die Verbindung im Randbereiche durch Bindemittel erfolgen. Eine Verbindung ist aber auch dadurch möglich, dass das in der Mineralfasermasse enthaltene Bindemittel während des Kompressionsvorgangs aktiviert und ausgehärtet wird. Hierbei werden das Förderelement und die Kaschierung mit dem im Mineralfaserhaufen enthaltenen Bindemittel verklebt, so dass nach dem Kompressionsvorgang ein beidseitig kaschiertes Formteil entsteht.

Alternativ zu den voranstehenden Ausführungen kann ein kontinuierlicher Verfahrensablauf dadurch erzielt werden, dass die Kompressionsvorrichtung zumindest zwei gegeneinander laufende Preßwalzen aufweist, zwischen denen zumindest das Förderelement und die Mineralfasern und gegebenenfalls auch die Kaschierung geführt werden. In zumindest einer Umfangsfläche einer Preßwalze ist zumindest eine Matrize ausgebildet. Werden kleinere Formteile hergestellt, so können mehrere Matrizen in zumindest einer Preßwalze vorgesehen sein.

Es hat sich ferner als vorteilhaft herausgestellt, die Preßwalzen bzw. die Stempel in der Kompressionsvorrichtung zu beheizen, um ergänzende Wärmeenergie bereitzustellen, die das Aushärten des Bindemittels beschleunigt. Ergänzend oder alternativ können die Preßwalzen bzw. die Stempel perforiert, insbesondere mikroperforiert ausgebildet sein, so dass die Möglichkeit besteht Heißluft durch die Preßwalzen oder die Stempel zu führen, um somit die Aushärtezeiten des Bindemittels zu verkürzen. Dies ist insbesondere durch die Verwendung von Mineralwolle möglich, da diese diffusionsoffen ausgebildet ist.

Die voranstehenden Vorteile der erfindungsgemäßen Verfahren treffen im übrigen auch auf ein erfindungsgemäßes Formteil zu.

Weitere Merkmale und Vorteile der Erfindung ergeben sich aus der nachfolgenden Beschreibung der zugehörigen Zeichnung, in der ein erfindungsgemäßer Formkörper in beziehungsweise Abschnitte des erfindungsgemäßen Verfahrens dargestellt sind. In der Zeichnung zeigen:
Figur 1 einen Formkörper in geschnitten dargestellter Seitenansicht;
Figur 2 ein Preßwerkzeug zur Durchführung eines Verfahrens zur Herstellung eines Formpressteils aus Mineralfasern und
Figur 3 ein Preßwerkzeug und Bevorratungseinrichtung zur Durchführung des Verfahrens gemäß Figur 2 und
Figur 4 eine schematische Darstellung einer Vorrichtung zur Herstellung eines Formkörpers.

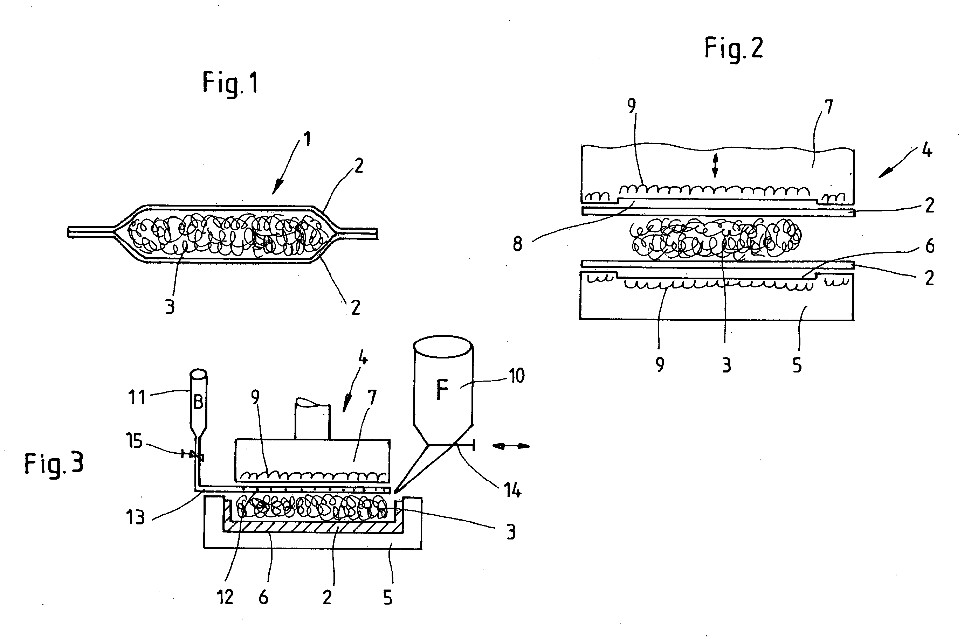

Ein in Figur 1 dargestelltes Formteil 1 besteht aus zwei deckungsgleich angeordneten Trägermaterialien 2, beispielsweise aus einem Kohlefaservlies und einem Formkörper 3 aus Mineralfasern, die zu Flocken und/oder Granulaten agglomeriert und mit Bindemitteln gebunden sind. Die Trägermaterialien 2 sind um den Formkörper 3 umlaufend über ein Bindemittel miteinander verbunden.

In Figur 2 ist eine erste Ausführungsform einer Preßvorrichtung zur Herstellung eines Formteils 1 gemäß Figur 1 dargestellt. Die Preßvorrichtung 4 besteht aus einer unteren Matrize 5 mit einer Form 6 und einem oberen Stempel 7, der eine weitere Form 8 aufweist. Die Form 6 ist ebenso wie die Form 8 als Ausnehmung in der Matrize 5 bzw. dem Stempel 7 ausgebildet.

Sowohl die Matrize 5 als auch der Stempel 7 weisen im Bereich der Form 6 bzw. der Form 8 Heizelemente 9 auf, mit denen der Stempel 7 bzw. die Matrize 5 im Bereich der Form 6 bzw. 8 aufgeheizt werden, um ein Bindemittel zwischen den Fasern des Formkörpers 3 auszuhärten.

Der Stempel 7 ist entsprechend dem Doppelpfeil in Figur 2 relativ zur Matrize 5 hin oder von dieser weg bewegbar.

In Figur 3 ist eine alternative Preßvorrichtung 4 mit einer Bevorratungseinrichtung 10 für Fasermaterial und einer Bevorratungseinrichtung 11 für Bindemittel dargestellt.

Aus der Bevorratungseinrichtung 10 werden Mineralfasern pneumatisch in Form von Flocken und/oder Granulaten in die Form 6 der Matrize 5 auf eine Auflage in Form eines Trägermaterials 2 gefördert. Gleichzeitig werden aus der Bevorratungseinrichtung 11 Bindemittel abgezogen, die einer eine Vielzahl von Düsen 12 aufweisenden Zufuhrleitungen 13 zugeführt werden, die sich über annähernd die gesamte Länge der Form 6 der Matrize erstreckt. Die Bindemittel werden über die Düsen 12 auf die Flocken und/oder Granulate aufgesprüht, bis die gewünschte Schüttdichte der Flocken und/oder Granulate sowie der gewünschte Bindemittelanteil in der Form 7 enthalten sind.

Hieran anschließend wird die Zufuhrleitung 13 aus der in Figur 3 dargestellten Stellung horizontal um 90° verschwenkt, so dass der Stempel 7 in die Matrize eingefahren werden kann. Über den Stempel 7 wird das Fasermaterial zur Bildung des Formkörpers 3 verdichtet, wobei gleichzeitig über das Heizelement 9 die für die thermische Aushärtung des Bindemittels erforderliche Temperatur erzeugt wird. Über das Bindemittel wird ferner der Formkörper 3 mit dem Trägermaterial 2 verbunden, so dass sich ein einstückiges Formteil 1 ergibt.

Die Zufuhr der Flocken und Granulate aus der Bevorratungseinrichtung 10 wird über einen Schieber 14 am Ausgang der Bevorratungseinrichtung 10 gesteuert, während die Zufuhr des Bindemittels aus der Bevorratungseinrichtung 11 über ein Ventil 15 steuerbar ist.

Mit den in den Figuren 2 und 3 dargestellten Preßvorrichtungen werden Verfahren zur Herstellung eines als Schalldämmelement dienenden Formteils durchgeführt, bei dem das Formteil 1 aus Mineralfasern zu Flocken und/oder Granulaten agglomeriert und mit Bindemittel mit vorbestimmter Schüttdichte und vorbestimmten Bindemittelanteil in eine Form 6 eingefüllt und anschließend als Formteil (1) gepreßt werden. Die Flocken und/oder Granulate werden bei diesem Verfahren aus matten- und/oder plattenförmigen Faservliesen hergestellt und in einer Bevorratungseinrichtung 10 bevorratet. Gemeinsam mit Bindemittel aus einer Bevorratungseinrichtung 11 werden die Flocken und/oder Granulate in die Form 6 auf eine Auflage in Form eines Trägermaterials 2 aufgebracht und anschließend zu dem Formteil 1 gepreßt. Bei diesem Verfahren weisen die Flocken und/oder Granulate eine Größe auf, die eine Siebweite von 12 bis 12,5 mm passiert.

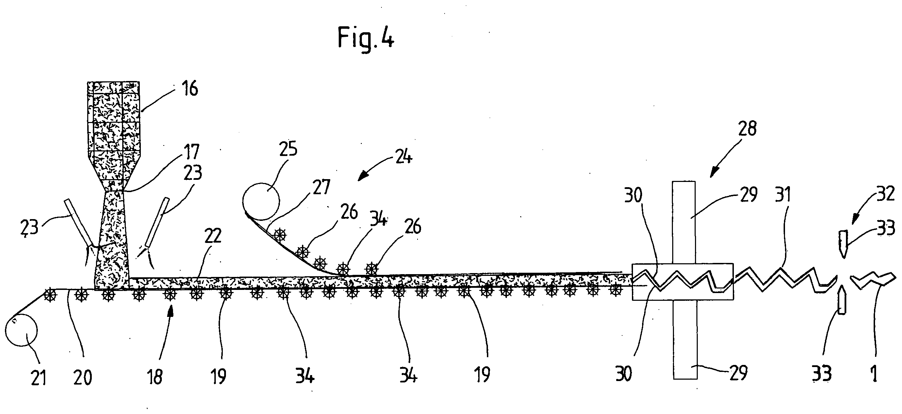

In Figur 4 ist eine Vorrichtung zur Herstellung eines Formteils 1 schematisch dargestellt. Die Vorrichtung besteht aus einer Bevorratungseinrichtung 16, in der Mineralfasern in Form von Granulaten und/oder Flocken bevorratet sind. Die Bevorratungseinrichtung 16 weist einen Auslass 17 auf, über den Mineralfasern kontinuierlich oder getaktet aus der Bevorratungseinrichtung 16 abgezogen werden. Der Bevorratungseinrichtung 16 nachgeschaltet ist eine Fördereinrichtung 18, die aus einer Vielzahl parallel zueinander ausgerichteter Walzen 19 besteht, über die ein Förderelement 20 befördert wird. Das Förderelement 20 ist aus einem Faservlies ausgebildet, welches auf einer der Fördereinrichtung 18 vorgeschalteten Vorratsrolle 21 gespeichert und von dieser abziehbar ist.

Die Mineralfasern werden als Faserbahn 22 mit gleichmäßiger Materialstärke auf dem Förderelement 20 abgelegt. Vor dem Auftreffen der Mineralfasern auf das Förderelement 20 werden die Mineralfasern über Düsen 23 mit zumindest einem thermisch aushärtbaren Bindemittel besprüht.

Oberhalb der Fördereinrichtung 18 ist eine Kaschierstation 24 angeordnet, die aus einer Vorratsrolle 25 und mehreren Kaschierwalzen 26 besteht, wobei die Vorratsrolle 25 ein Kaschiervlies 27 aufweist, welches über die Kaschierwalzen 26 auf die Faserbahn 22 aufgebracht wird.

Die Faserbahn 22 ist in der Regel schmaler ausgebildet, als das Förderelement 20 und das Kaschiervlies 27, so dass das Kaschiervlies 27 über die in Längsrichtung verlaufenden Seitenflächen der Faserbahn 22 übersteht und vorzugsweise auf dem darunterliegenden Förderelement 20 aufliegt.

Der Fördereinrichtung 18 nachgeschaltet ist eine Kompressionsvorrichtung 28, die aus zwei Stempeln 29 mit jeweils einer Matrize 30 besteht, wobei zwischen den Stempeln 29 der Kompressionsvorrichtung 28 das Förderelement 20 mit den darauf angeordneten Mineralfasern und dem Kaschiervlies 27 komprimiert und zu einem Band 31 aus mehreren Formteilen 1 gepreßt wird. Im Anschluss an die Kompressionsvorrichtung ist eine Schneideinrichtung 32 mit zumindest einem Messer 33 angeordnet. In der Schneideinrichtung 32 werden die im Band 31 nebeneinander angeordneten Formteile 1 zumindest teilweise voneinander getrennt.

Die Schneideinrichtung 32 kann abweichend von der in Fig. 4 dargestellten Ausführungsform darüber hinaus auch weitere Messer aufweisen, die parallel zur Längserstreckung des Bandes 31 schneiden.

Die Walzen 19 und die Kaschierwalzen 26 sind als sogenannte Stachelwalzen ausgebildet und weisen außenseitig radial verlaufende Stachel 34 auf, die in das Kaschiervlies 27 bzw. das Förderelement 20 beidseitig der Faserbahn 22 eindringen und somit einer formschlüssigen Förderung des Förderelements 20 bzw. des Kaschiervlieses 27 dienen.

Ferner kann vorgesehen sein, dass die Matrizen 30 der Stempel 29 beheizt ausgebildet sind, so dass die Stempel 29 nicht nur der formgebenden Kompression, sondern auch der Aktivierung und dem Aushärten des Bindemittels in der Faserbahn 22 dienen.

Die Kompressionsvorrichtung 28 kann schließlich auch als Härteofen ausgebildet sein, in dem Heißluft in das Förderelement 20, die Faserbahn 22 und das Kaschiervlies 27 geführt ist.

**Bezugszeichenliste**

| | | | |
|---|---|---|---|
| 1 | Formteil | 18 | Fördereinrichtung |
| 2 | Trägermaterial | 19 | Walze |
| 3 | Formkörper | 20 | Förderelement |
| 4 | Preßvorrichtung | 21 | Vorratsrolle |
| 5 | Matrize | 22 | Faserbahn |
| 6 | Form | 23 | Düse |
| 7 | Stempel | 24 | Kaschierstation |
| 8 | Form | 25 | Vorratsrolle |
| 9 | Heizelement | 26 | Kaschierwalze |
| 10 | Bevorratungseinrichtung | 27 | Kaschiervlies |
| 11 | Bevorratungseinrichtung | 28 | Kompressionsvorrichtung |
| 12 | Düsen | 29 | Stempel |
| 13 | Zufuhrleitung | 30 | Matrize |
| 14 | Schieber | 31 | Band |
| 15 | Ventil | 32 | Schneideinrichtung |
| 16 | Bevorratungseinrichtung | 33 | Messer |
| 17 | Auslass | 34 | Stachel |

## Patentansprüche

1. Verfahren zur Herstellung eines als Wärme- und/oder Schalldämmelement ausgebildeten Formteils aus Mineralfasern bei dem die Mineralfasern als Flocken und/oder Granulate agglomeriert, mit oder ohne Bindemittel mit vorbestimmter Schüttdichte und/oder vorbestimmtem Flächengewicht und/oder vorbestimmtem Bindemittelanteil in eine Form eingefüllt und anschließend als Formteil gepresst werden, **dadurch gekennzeichnet, dass** aus den Flocken und/oder Granulaten Formteile mit einem Flächengewicht zwischen 200 und 7.500 g/m² hergestellt werden.

2. Verfahren zur Herstellung eines als Wärme- und/oder Schalldämmelement ausgebildeten Formteils aus Mineralfasern bei dem die Mineralfasern als Flocken und/oder Granulate agglomeriert auf einem Förderelement abgelegt werden, das Bestandteil des Formteils wird, **dadurch gekennzeichnet, dass** ein Teil des Förderelementes mit darauf angeordneten Mineralfasern, während oder nach dem Pressvorgang abgetrennt wird.

3. Verfahren nach Anspruch 2,
**dadurch gekennzeichnet,**
**dass** die Mineralfasern mit dem Förderelement mittels zumindest eines Bindemittels verbunden werden.

4. Verfahren nach Anspruch 2,
**dadurch gekennzeichnet,**
**dass** die Mineralfasern vor dem Ablegen auf dem Förderelement mit Binde- und/oder Imprägniermittel benetzt werden.

5. Verfahren nach Anspruch 2,
**dadurch gekennzeichnet,**
**dass** das Förderelement aus einem Kohlefaservlies ausgebildet wird.

6. Verfahren nach Anspruch 2,
**dadurch gekennzeichnet,**
**dass** das Förderelement über im Seitenbereich entlang der Längsachsenerstreckung eingreifende Fördereinrichtung gefördert wird.

7. Verfahren nach Anspruch 2,
**dadurch gekennzeichnet,**
**dass** das Förderelement kontinuierlich oder in einer vorgegebenen Taktung von einer Vorratsrolle abgezogen wird.

8. Verfahren nach Anspruch 3 oder 4,
**dadurch gekennzeichnet,**
**dass** das oder die Bindemittel in einer Kompressionsvorrichtung thermisch ausgehärtet werden.

9. Verfahren nach Anspruch 2,
**dadurch gekennzeichnet,**
**dass** eine Kaschierung auf den auf dem Förderelement aufgelegten Mineralfasern angeordnet wird.

10. Verfahren nach Anspruch 2,
**dadurch gekennzeichnet,**
**dass** die Mineralfasern und das Förderelement und eine Kaschierung während des Pressvorgangs mit Heißluft durchströmt werden.

11. Verfahren nach Anspruch 1 oder 2,
**dadurch gekennzeichnet,**
**dass** die Flocken und/oder Granulate mit einer Schüttdichte von 20 bis 1.000 kg/m³ in die Form gefüllt wird.

12. Verfahren nach Anspruch 1 oder 2,
**dadurch gekennzeichnet,**
**dass** die Flocken und/oder Granulate aus Fasern unterschiedlicher Ausgangsmaterialien hergestellt werden.

13. Verfahren nach Anspruch 1,
**dadurch gekennzeichnet,**
**dass** zumindest ein flüssiges Bindemittel den Flocken und/oder Granulaten vor und/oder während dem Einbringen in die Form zugeführt wird.

14. Verfahren nach Anspruch 1,
**dadurch gekennzeichnet,**
**dass** die Flocken und/oder Granulate mit dem Bindemittel in der Form zur Bildung eines Formkörpers aus der Form und den Mineralfasern ausgehärtet werden.

15. Verfahren nach Anspruch 1,
**dadurch gekennzeichnet,**
**dass** die Flocken und/oder Granulate mechanisch gebunden werden.

16. Vorrichtung zur Herstellung eines als Wärme- und/oder Schalldämmelement ausgebildeten Formteils aus Mineralfasern mit einem Verfahren nach einem der Ansprüche 2 bis 11, mit einer Bevorratungseinrichtung für die Mineralfasern, einer der Bevorratungseinrichtung nachgeschalteten Fördereinrichtung und einer Kompressionsvorrichtung, in der die Mineralfasern formgebend komprimiert werden,
**dadurch gekennzeichnet,**
**dass** die Fördereinrichtung (18) ein Förderelement (20) aufweist, welches mit den Mineralfasern verbindbar ist.

17. Vorrichtung nach Anspruch 16,
**dadurch gekennzeichnet,**
**dass** zwischen der Bevorratungseinrichtung (16) und der Fördereinrichtung (18) Düsen (23) angeordnet sind, mit denen die aus der Bevorratungseinrichtung (16) abgezogenen Mineralfasern mit Binde- und/oder Imprägniermittel benetzt werden.

18. Vorrichtung nach Anspruch 16,
**dadurch gekennzeichnet,**
**dass** die Fördereinrichtung (18) eine Vielzahl von parallel ausgerichteten Walzen (19) aufweist, über die das Förderelement (20) gefördert wird, wobei die Walzen (19) eine Oberfläche mit einem hohen Reibwert und/oder in das Förderelement (20) formschlüssig eingreifende Vorsprünge aufweisen.

19. Vorrichtung nach Anspruch 16,
**dadurch gekennzeichnet,**
**dass** die Kompressionsvorrichtung (28) zumindest zwei gegenläufige Presswalzen mit zumindest in einem Umfang angeordneter Matrize (30) aufweist, zwischen denn das Förderelement (20) und die Mineralfasern geführt sind.

20. Vorrichtung nach Anspruch 16,
**dadurch gekennzeichnet,**
**dass** der Kompressionsvorrichtung (28) oberhalb der Fördereinrichtung (18) eine Kaschierstation (24) vorgeschaltet ist, in der eine auf das Förderelement (20) und die Mineralfasern aufbringbare Kaschierung bevorratet ist.

21. Vorrichtung nach Anspruch 16,
**dadurch gekennzeichnet,**
**dass** die Kompressionsvorrichtung (28) als Härteofen ausgebildet ist, in dem Heißluft durch das Förderelement (20) und die Mineralfasern und durch eine Kaschierung geführt ist.

22. Formteil als Wärme- und/oder Schalldämmelement , hergestellt mit einem Verfahren nach einem der Ansprüche 1 bis 15, bestehend aus Mineralfasern, die als Flocken und/oder Granulate agglomeriert, mit oder ohne Bindemittel mit vorbestimmter Schüttdichte und/oder vorbestimmtem Flächengewicht zwischen 20 und 7.500 g/m² und/oder vorbestimmtem Bindemittelanteil in einer Form und/oder auf einer Auflage angeordnet und durch Druck miteinander verbunden sind, **dadurch gekennzeichnet, dass** die Flocken und/oder Granulate mit der Auflage oder der Form verbunden sind.

23. Formteil nach Anspruch 22,
**dadurch gekennzeichnet,**
**dass** die Flocken und/oder Granulate aus mit Bindemittel benetzten agglomerierten Mineralfasern bestehen.

24. Formteil nach Anspruch 22,
**gekennzeichnet**
**durch** eine Schüttdichte der Flocken und/oder Granulate von 20 bis 1.000 kg/m³.

25. Formteil nach Anspruch 22,
**gekennzeichnet**
**durch** hoch verdichtete Randbereiche und/oder Pinchkanten.

## Claims

1. Method for producing a molded part from mineral fibers designed as a heat insulating and/or sound absorbing element, in which the mineral fibers are agglomerated as flakes and/or granules, are filled into a mold with or without binder with a predetermined bulk density and/or predetermined weight per unit area and/or predetermined proportion of binder and are then pressed as a molded part, **characterized in that** molded parts with a weight per unit area of between 200 and 7,500 g/m2 are produced from the flakes and/or granules.

2. Method for producing a molded part from mineral fibers designed as a heat insulating and/or sound absorbing element, in which the mineral fibers are deposited in agglomerated form as flakes and/or granules on a conveying element which becomes part of the molded part, **characterized in that** a part of the conveying element with mineral fibers arranged thereon is separated during or after the pressing process.

3. Method according to claim 2,
**characterized in that**
the mineral fibers are bonded to the conveying element by means of at least one binder.

4. Method according to claim 2,
**characterized in that**
the mineral fibers are wetted with binding and/or impregnating agent before being deposited on the conveying element.

5. Method according to claim 2,
**characterized in that**
the the conveying element is formed from a carbon fiber fleece.

6. Method according to claim 2,
**characterized in that**
the conveying element is conveyed via a conveying device engaging in the lateral region along the longitudinal axis extension.

7. Method according to claim 2,
**characterized in that**
the conveying element is pulled off a supply roll continuously or at a predetermined clocking.

8. Method according to claim 3 or 4,
**characterized in that**
the binder or binders are thermally cured in a compression device.

9. Method according to claim 2,
**characterized in that**
a lamination is arranged on the mineral fibers placed on the conveying element.

10. Method according to claim 2,
**characterized in that**
hot air flows through the mineral fibers and the conveying element and a lamination during the pressing process

11. Method according to claim 1 or 2,
**characterized in that**
the flakes and/or granules are filled into the mold with a bulk density of 20 to 1,000 kg/m³.

12. Method according to claim 1 or 2,
**characterized in that**
the flakes and/or granules are produced from fibers of different starting materials.

13. Method according to claim 1,
**characterized in that**
the at least one liquid binder is fed to the flakes and/or granules before and/or during their introduction into the mold.

14. Method according to claim 1,
**characterized in that**
the flakes and/or granules are cured with the binder in the mold to form a molded body comprising the mold and the mineral fibers.

15. Method according to claim 1,
**characterized in that**
the flakes and/or granules are mechanically bound.

16. Device for producing a molded part from mineral fibers designed as a heat insulating and/or sound absorbing element using a method according to one of claims 2 to 11, the device including a storage device for the mineral fibers, a conveying device downstream of the storage device and a compression device in which the mineral fibers are compressed in a shaping manner,
**characterized in that**
the conveying device (18) has a conveying element (20) which can be connected to the mineral fibers.

17. Device according to claim 16,
**characterized in that**
nozzles (23) are arranged between the storage device (16) and the conveying device (18), with which the mineral fibers drawn from the storage device (16) are wetted with binding and/or impregnating agent.

18. Device according to claim 16,
**characterized in that**
the conveying device (18) has a plurality of parallel aligned rollers (19) via which the conveying element (20) is conveyed, the rollers (19) having a surface with a high coefficient of friction and/or having projections which engage in the conveying element (20) in a form-fitting manner.

19. Device according to claim 16,
**characterized in that**
the compression device (28) has at least two counter-rotating compression rollers with at least one die (30) arranged in a circumference, between which the conveying element (20) and the mineral fibers are guided.

20. Device according to claim 16,
**characterized in that**
a laminating station (24) is connected upstream of the compression device (28) above the conveying device (18), in which a lamination which can be applied to the conveying element (20) and the mineral fibers is stored.

21. Device according to claim 16,
**characterized in that**
the compression device (28) is designed as a curing oven in which hot air is passed through the conveying element (20) and the mineral fibers and through a lamination.

22. Molded part as a heat insulating and/or sound absorbing element, produced by a method according to one of claims 1 to 15, and consisting of mineral fibers which, agglomerated as flakes and/or granules, are arranged in a mold or on a support with or without binder with a predetermined bulk density and/or predetermined weight per unit area between 20 and 7,500 g/m² and/or predetermined proportion of binder and are connected to each other by pressure, **characterized in that** the flakes and/or granules are connected to the support or mold.

23. Molded part according to claim 22,
**characterized in that**
the flakes and/or granules consist of agglomerated mineral fibers wetted with binder.

24. Molded part according to claim 22,
**characterized by**
a bulk density of the flakes and/or granules of 20 to 1 000 kg/m³.

25. Molded part according to claim 22,
**characterized by**
highly compressed edge regions and/or pinch edges.

## Revendications

1. Procédé de fabrication d'un élément moulé en fibres minérales conçu comme élément d'isolation thermique et/ou acoustique, dans lequel les fibres minérales qui sont agglomérées sous forme de flocons et/ou de granulés sont remplies dans un moule avec ou sans liant avec une densité apparente prédéterminée et/ou un poids surfacique prédéterminé et/ou une proportion prédéterminée de liant et sont ensuite pressées en tant qu'élément moulé, **caractérisé en ce que** des éléments moulés avec un poids surfacique compris entre 200 et 7 500 g/m² sont fabriquées à partir des flocons et/ou des granulés.

2. Procédé de fabrication d'un élément moulé en fibres minérales, conçue comme élément d'isolation thermique et/ou acoustique, dans lequel les fibres minérales sont déposées sous forme agglomérée en tant que flocons et/ou granulés sur un élément de transport qui devient une partie de l'élément moulé, **caractérisé en ce qu'**une partie de l'élément de transport sur laquelle sont disposées des fibres minérales est séparée pendant l'opération de pressage.

3. Procédé selon la revendication 2,
**caractérisé en ce que**
les fibres minérales sont liées à l'élément de transport au moyen d'au moins un liant.

4. Procédé selon la revendication 2,
**caractérisé en ce que**
les fibres minérales sont imprégnées avec un liant et/ou un agent d'imprégnation avant d'être déposées sur l'élément de transport.

5. Procédé selon la revendication 2,
**caractérisé en ce que**
l'élément de transport est formé d'une nappe de fibres de carbone.

6. Procédé selon la revendication 2,
**caractérisé en ce que**
l'élément de transport est transporté par un dispositif de transport s'engageant dans la région latérale le long de l'extension de l'axe longitudinal.

7. Procédé selon la revendication 2,
**caractérisé en ce que**
l'élément de transport est retiré d'un rouleau d'alimentation en continu ou selon un cycle prédéterminé.

8. Procédé selon la revendication 3 ou 4,
**caractérisé en ce que**
le ou les liants sont durcis thermiquement dans un dispositif de compression.

9. Procédé selon la revendication 2,
**caractérisé en ce que**
un parement est disposé sur les fibres minérales placées sur l'élément de transport.

10. Procédé selon la revendication 2,
**caractérisé en ce que**
de l'air chaud circule à travers les fibres minérales et l'élément de transport et un parement pendant l'opération de pressage.

11. Procédé selon la revendication 1 ou 2,
**caractérisé en ce que**
les flocons et/ou les granulés sont remplis dans le moule avec une densité apparente de 20 à 1.000 kg/m³.

12. Procédé selon la revendication 1 ou 2,
**caractérisé en ce que**
les flocons et/ou les granulés sont produits à partir de fibres de différentes matières premières.

13. Procédé selon la revendication 1,
**caractérisé en ce que**
au moins un liant liquide est ajouté aux flocons et/ou aux granulés avant et/ou pendant leur introduction dans le moule.

14. Procédé selon la revendication 1,
**caractérisé en ce que**
les flocons et/ou les granulés sont durcis avec le liant dans le moule pour former un corps moulé comprenant le moule et les fibres minérales.

15. Procédé selon la revendication 1,
**caractérisé en ce que**
les flocons et/ou les granulés sont liés mécaniquement.

16. Dispositif pour la fabrication d'un élément moulé en fibres minérales conçu comme élément d'isolation thermique et/ou acoustique, avec un procédé selon l'une des revendications 2 à 11, comprenant un dispositif de stockage pour les fibres minérales, un dispositif de transport en aval du dispositif de stockage et un dispositif de compression dans lequel les fibres minérales sont comprimées de manière à être mises en forme, **caractérisé en ce que**
le dispositif de transport (18) comporte un élément de transport (20) qui peut être relié aux fibres minérales.

17. Dispositif selon la revendication 16,
**caractérisé en ce que**
des buses (23) sont disposées entre le dispositif de stockage (16) et le dispositif de transport (18), avec lesquelles les fibres minérales prélevées du dispositif de stockage (16) sont imprégnées avec un liant et/ou un agent d'imprégnation.

18. Dispositif selon la revendication 16,
**caractérisé en ce que**
le dispositif de transport (18) présente une pluralité de rouleaux (19) alignés parallèlement, par lesquels l'élément de transport (20) est transporté, les rouleaux (19) présentant une surface à coefficient de frottement élevé et/ou des saillies qui s'engagent par complémentarité de forme dans l'élément de transport (20).

19. Dispositif selon la revendication 16,
**caractérisé en ce que**
le dispositif de compression (28) présente au moins deux rouleaux de compression tournant en sens inverse avec au moins une matrice (30) disposée dans un circonférence, entre lesquels rouleaux l'élément de transport (20) et les fibres minérales sont guidés.

20. Dispositif selon la revendication 16,
**caractérisé en ce que**
un poste de laminage (24) est monté en amont du dispositif de compression (28) au-dessus du dispositif de transport (18), dans lequel est stocké le parement pouvant être appliqué sur l'élément de transport (20) et les fibres minérales.

21. Dispositif selon la revendication 16,
**caractérisé en ce que**
le dispositif de compression (28) est conçu comme un four de durcissement dans lequel de l'air chaud passe à travers l'élément de transport (20) et les fibres minérales et à travers un parement.

22. Élément moulé comme élément d'isolation thermique et/ou acoustique, fabriquée par un procédé selon l'une des revendications 1 à 15 et constitué de fibres minérales qui, agglomérées sous forme de flocons et/ou de granulés, sont disposées dans un moule et/ou sur un support avec ou sans liant avec une densité apparente prédéterminée et/ou un poids surfacique prédéterminé compris entre 20 et 7.500 g/m² et/ou une teneur en liant prédéterminée et reliées entre elles par pression, **caractérisé en ce que** les flocons et/ou les granulés sont reliées au moule et au support.

23. Élément moulé selon la revendication 22,
**caractérisé en ce que**
les flocons et/ou les granulés sont constitués de fibres minérales agglomérées imprégnées par un liant.

24. Élément moulé selon la revendication 22,
**caractérisé par**
une masse volumique apparente des flocons et/ou des granulés de 20 à 1.000 kg/m³.

25. Élément moulé selon la revendication 22,
**caractérisé par**
des bords fortement comprimés et/ou des bords pincés.
